(19) Europäisches Patentamt / European Patent Office / Office européen des brevets

(11) **EP 1 692 824 B1**

(12) **FASCICULE DE BREVET EUROPEEN**

(45) Date de publication et mention
de la délivrance du brevet:
**18.07.2007 Bulletin 2007/29**

(21) Numéro de dépôt: **04767499.9**

(22) Date de dépôt: **28.06.2004**

(51) Int Cl.:
*H04L 12/56* *(2006.01)*

(86) Numéro de dépôt international:
**PCT/FR2004/001654**

(87) Numéro de publication internationale:
**WO 2005/013565 (10.02.2005 Gazette 2005/06)**

(54) **PROCEDE ET SERVEUR DE CONTROLE DES FLUX DE DONNEES DANS UN RESEAU DE TELECOMMUNICATIONS**

VERFAHREN UND SERVER ZUR STEUERUNG VON DATENFLÜSSEN IN EINEM TELEKOMMUNIKATIONSNETZ

METHOD AND SERVER FOR CONTROLLING DATA FLOWS IN A TELECOMMUNICATIONS NETWORK

(84) Etats contractants désignés:
**AT BE BG CH CY CZ DE DK EE ES FI FR GB GR HU IE IT LI LU MC NL PL PT RO SE SI SK TR**

(30) Priorité: **01.07.2003 FR 0307995**

(43) Date de publication de la demande:
**23.08.2006 Bulletin 2006/34**

(73) Titulaire: **Alcatel Lucent**
**75008 Paris (FR)**

(72) Inventeurs:
• **CONTE, Alberto**
**F-75014 Paris (FR)**
• **DAUCHY, Philippe**
**F-75014 Paris (FR)**
• **QIAN, Lie**
**Richardson, TX 75080 (US)**
• **WANG, Yuke**
**Plano, TX 75074 (US)**
• **TANG, Yiyan**
**Richardson, TX 75080 (US)**
• **KRISHNAMURTHY, Anand**
**Fremont, CA 94555 (US)**

(74) Mandataire: **Korakis-Ménager, Sophie et al**
**Alcatel Lucent**
**Intellectual Property & Standards**
**54 rue La Boétie**
**75008 Paris (FR)**

(56) Documents cités:
**WO-A-00/79829      US-A- 5 848 057**

• **KNIGHTLY E W ED - INSTITUTE OF ELECTRICAL AND ELECTRONICS ENGINEERS: "H-BIND: a new approach to providing statistical performance guarantees to VBR traffic" PROCEEDINGS OF IEEE INFOCOM 1996. CONFERENCE ON COMPUTER COMMUNICATIONS. FIFTEENTH ANNUAL JOINT CONFERENCE OF THE IEEE COMPUTER AND COMMUNICATIONS SOCIETIES. NETWORKING THE NEXT GENERATION. SAN FRANCISCO, MAR. 24 - 28, 1996, PROCEEDINGS OF INFOCOM, L, vol. VOL. 2 CONF. 15, 24 mars 1996 (1996-03-24), pages 1091-1099, XP010158178 ISBN: 0-8186-7293-5 cité dans la demande**

## Description

La présente invention se rapporte à un procédé et à un serveur de contrôle des flux de données dans un réseau de télécommunications, notamment pour effectuer des admissions de nouveaux flux de données dans ce réseau.

Un réseau de télécommunication, tel que le réseau Internet, peut transmettre des données de nature diverses, et notamment des données multimédia codant des informations telles qu'une conversation, une image et/ou une séquence d'images.

A cet effet, ces informations sont codées en un langage informatique puis transmises par paquets de données de façon à générer un flux de données, chaque paquet du même flux ayant une même étiquette comprenant notamment les adresses, dans le réseau, de l'émetteur et du récepteur du flux de données.

Pour obtenir une bonne qualité de transmission de ce flux de données, il convient d'éviter que le réseau transmettant ce flux présente des encombrements de flux provoquant des délais de transmission des paquets, élevés, la perte d'un ou de plusieurs de ces paquets et/ou autres phénomènes diminuant la qualité de communication du réseau.

C'est pourquoi, lorsqu'un flux de données doit être admis dans un réseau de communication, un serveur de contrôle de la qualité de service (QoS) détermine si l'admission de ce nouveau flux de données dans le réseau peut être acceptée en assurant que la transmission de ce nouveau flux de données et les transmissions de flux de données en cours dans le réseau sont effectuées avec le niveau de qualité requis.

Par ailleurs, les flux de données peuvent présenter des débits variables, notamment lorsque ces données codent des informations audio et/ou video rotatives à, par exemple, une vidéo-conférence. En outre, la variation du débit d'un flux, c'est-à-dire la continuité de ce flux, est aussi variable en fonction de la nature des données transmise par ce flux.

Par exemple, lors de la transmission d'une conversation téléphonique, des périodes de silence générant un débit faible de données alternent avec des périodes de conversations qui génèrent des débits de données plus élevés. En outre, le débit, du flux de données relatif à une telle conversation varie faiblement. On dit alors qu'un tel flux présente une faible discontinuité (en anglais, « low burstiness »).

Selon un autre exemple, la transmission d'une séquence d'images relative à, par exemple, une vidéo, entraîne une alternance de périodes de transmission d'images, présentant un débit très élevé, avec des périodes de débit quasiment nul. Dans ce cas, le débit du flux de données présente une forte discontinuité (en anglais, « high burstiness »).

Comme précédemment indiqué, lorsqu'un flux de données doit être transmis via un réseau de télécommunication, un serveur de contrôle de la qualité de service de ce réseau doit déterminer si ce dernier peut transporter ce nouveau flux tout en assurant sa qualité et celle des transmissions en cours.

Tandis; qu'un tel contrôle de flux de données s'avère relativement simple à mettre en oeuvre lorsque le débit du flux à admettre est connu préalablement à son éventuel admission, cette mise en oeuvre est plus complexe lorsque le débit de ce flux varie postérieurement à son admission, comme dans le cas des flux de données multimédia, et ceci d'autant plus que ce flux présente une forte discontinuité.

De ce fait, il est connu d'utiliser des modélisation permettant de déterminer, de façon statistique, l'admission d'un flux de données dans le réseau en considérant l'ensemble des flux considéré par le réseau, cet ensemble étant dénommé par la suite le trafic du réseau voir US 5848057.

Ces modélisations du trafic de données utilisent des paramètres associés à ce trafic comme, par exemple, un taux maximum de débit, un degré de discontinuité du signal et/ou un taux moyen de débit afin de valider ou de refuser l'admission du nouveau flux de données de façon à respecter un compromis prédéterminé entre la qualité requise et l'utilisation maximale, c'est-à-dire le rendement, du réseau.

Une modélisation connue du trafic de données dans un réseau de télécommunication utilise des paires de valeurs composées d'intervalles de temps- et de débits maximum permis pendant ces intervalles de temps, cette modélisation étant dénommée par la suite modélisation D-BIND ('Deterministic Bounding Interval-length Dependent').

De façon pratique, il est connu d'utiliser la modélisation D-BIND pour caractériser notamment le trafic vidéo en définissant un nombre $p$ de paires :

$$\{(R_k, I_k) \mid k = 1, ..., p\} \qquad (1)$$

où $I_k$ est un intervalle de temps et $R_k$ est le débit maximum de données que le flux considéré peut envoyer pendant cer intervalle $I_k$.

Ainsi, si $A_j[t_1\text{-}t_2]$ représente le nombre total de bits envoyés par le flux $j$ de données entre les instants $t_1$ et $t_2$, alors le débit maximum $R_k$ de données pour le flux $j$ est défini comme étant :

$$R_k = \max_{0 \le t} \left( \frac{A_j[t, t + I_k]}{I_k} \right).$$

*p* étant normalement choisi pour être de l'ordre de 4 à 8 de façon empirique, cet ensemble de Rk étant utilisé comme, paramètre pour l'algorithme de contrôle d'admission comme décrit, par exemple, dans la publication de E. W. Kriightly, "H-BIND: A New Approach to Providing Statistical Performance Guarantees to VBR Traffic," publié dans la revue Proceedings of IEEE INFOCOM '96, (San Francisco, CA), pp. 1091--1099, en Mars 1996.

Une application connue du modèle D-BIND est relative à la transmission de vidéo codée selon le protocole MPEG (Motion Picture Expert Group), le trafic étant alors caractérisé par trois types de sous-ensembles de données, ou frames, dénommés I, B, et P et comprenant des quantités de données distinctes et un ordre de transmission déterminé.

Dans ce cas, les propriétés de MPEG requièrent que différentes longueurs d'intervalles $I_k$ soient utilisées pour caractériser un flux MPEG dans son ensemble.

Le contrôle d'admission d'un flux de données au moyen du modèle S-Bind peut être effectué au moyen d'un algorithme, dénommé H-BIND, qui utilise les paires $\{(R_k, I_k) \mid k = 1,..., p\}$ fournies par le modèle de trafic D-BIND.

Plus précisément, l'algorithme H-BIND considère le flux de données comme une distribution gaussienne de, telle sorte qu'on peut calculer la variance et la moyenne de cette distribution en considérant la situation la plus défavorable pour chaque intervalle de temps $I_k$ considéré, c'est-à-dire la situation telle que la variance est considérée à sa valeur maximale dans cet intervalle, la prévision du trafic étant alors moins performante.

A partir de cette variance et de cette moyenne, l'algorithme calcule la probabilité de dépassement des limites admises en termes de délais vis-à-vis de l'intervalle $I_k$ pour évaluer la probabilité maximum de dépassement des limites admises de délais pour le flux total, c'est-à-dire le flux entrant et le flux en cours de transmission.

A cet effet, l'algorithme H-BIND découpe le temps en intervalles, qui peuvent correspondre, dans le cas de la vidéo MPEG au temps nécessaire pour transmettre un sous-ensemble de données, ce flux de données étant alors modélisé par une série de nombres réels positifs

$\{X_{t_1}, X_{t_2}, ..., X_{t_N}\}$ obtenus à partir d'une fonction *b(t)* générée au moyen des paires $\{(R_k, I_k) \mid k=1, ..., p\}$ fournie par la modélisation D-BIND, précédemment décrites, selon la formule suivante:

$$b(t) = \frac{R_k I_k - R_{k-1} I_{k-1}}{I_k - I_{k-1}} (t - I_k) + R_k I_k, I_{k-1} \le t \le I_k$$

A partir de cette fonction *b(t)*, on obtient les valeurs de b(t) pour chaque intervalle de temps considéré, ce qui génère la série :

$\{b_{t_1}, b_{t_2}, ..., b_{t_N}\}$ .

Le procédé pour obtenir un maximum de la variance de la série de données modélisant les débits de données dans les intervalles est du type tout ou rien où le tout est représenté par b1 qui est la valeur du nombre de données du plus petit sous-ensemble et rien par 0.

La nouvelle série $\{X_{t_1}, X_{t_2}, ....X_{t_N}\}$ est alors du type

$\{b_{t_1},0,0, b_{t_1},0,0,0, b_{t_1},0,0,0, b_{t_1},0,0,0...\}$

le nombre de zéros entre les $b_{t_1}$ étant obtenus à partir de la fonction *b(t)*.

Une fois que la séquence $\{X_{t_1}, X_{t_2},...,X_{t_N}\}$ est obtenue, on calcule la moyenne et la variance des débits sur des intervalles de longueur *k* :

$$\mu = \left(\frac{1}{N'}\right) \sum_{i=1}^{N'} X_{I_i} \quad (I)$$

$$\sigma^2(t_k) = \left(\frac{1}{N-k}\right) \sum_{i=1}^{N-k+1} \left(\frac{\sum_{m=0}^{k-1} X_{t_i+t_m} - k\mu}{t_k}\right)^2$$

Selon le théorème de la Umite Centrale (Central Limit Theorem 'CLT', en anglais), le trafic multiplexé peut être modélisé en utilisant l'algorithme H-BIND par une distribution Normale $\hat{B}(t_k)$ ayant pour valeur moyenne

$$\hat{\mu}(t_k) = \sum_j k\mu_j$$

et pour variance

$$\hat{\sigma}(t_k) = \sum_j t_k^2 \sigma_j^2(t_k) \,,$$

où $\mu_j$ et $\sigma_j(t_k)$ sont évalués pour chaque flux de données $j$. La probabilité de dépassement de la limite établie en délai $d_j$ est :

$$\mathrm{Pr}ob\{delay > d_j\} = \max_{0 \le t_k \le \beta} \mathrm{Pr}ob\{\hat{B}(t_k) - Ct_k \ge Cd_j\}$$

où

$$\beta = \min\{t > 0 \mid \sum_j b_j(t) \le Ct\}$$

est la limite de la limite de la période d'occupation (en anglais, « busy period bound »).

La modélisation H-BIND est réalisée pour tous les flux de données en cours et pour le flux de données- en attente de l'autorisation d'admission dans, le réseau.

Si la probabilité de dépassement du délai pour la limite du délai $d_j$ du flux de données $j$ est plus petite que le niveau imposé $P_l$, le nouveau flux de données sera autorisé à entrer dans le réseau.

La présente invention résulte de la constatation que, en transformant la séquence
$\{b_{t_1}, b_{t_2}, ...., b_{t_N}\}$
en une nouvelle séquence
$\{b_{t_1}, 0, 0, b_{t_1}, 0, 0, 0, b_{t_1}, 0, 0, 0, b_{t_1}, 0, 0, 0... \}$
comme expliqué ci-dessus, le flux de données est modélisé par une séquence de valeurs qui est sous la contrainte de la fonction $b(t)$, c'est-à-dire avec une variance maximale parmi les séquences qui soient sous la contrainte de $b(t)$.

En d'autres termes, l'algorithme H-BIND utilise le cas le plus défavorable pour analyser le trafic du réseau, ce qui provoque un rendement affaibli d'utilisation du réseau génère des résultats satisfaisants, pour un flux de données présentant un grand degré de discontinuité comme un flux vidéo.

Cependant, si le trafic est peu discontinu, cet algorithme H-BIND tend à provoquer une sous-utilisation de la capacité du réseau, ce qui représente un problème important vis-à-vis de la rentabilité du réseau de communication et un problème d'évaluation de discontinuité dans un réseau.

La présente invention vise à résoudre ce problème. Ainsi, elle concerne un procédé de contrôle du trafic de données dans un réseau de télécommunications, ce, contrôle étant effectué en considérant une modélisation statistique du trafic transmis par ce réseau au moyen d'une distribution Gaussienne du débit de données, une pondération d'une valeur caractéristique de cette distribution Gaussienne au moyen d'un paramètre variant en fonction de l'intensité des variations, ou la discontinuité, du trafic traité par ce réseau est effectuée, cette valeur pondérée étant utilisée pour évaluer le trafic dans le réseau, caractérisé en ce qu'on définit le paramètre $\gamma$ de pondération à l'aide d'une valeur moyenne $\lambda_{avg}$ du débit de, données et d'une valeur $\lambda_{peak}$ maximum de ce débit sur une période donnée.

Un algorithme utilisant un procédé conforme à l'invention, dénommé par la suite algorithme $\gamma$H-BIND, peut utiliser ce paramètre $\gamma$ pour modifier la modélisation gaussienne du trafic de données en fonction de la discontinuité de ce trafic.

Grâce à un procédé conforme à l'invention, on améliore de façon sensible l'utilisation de la capacité du réseau pour du trafic ayant un faible degré de discontinuité ('non-bursty').

Selon une réalisation, on définit le paramètre $\gamma$ de pondération comme le rapport entre la moyenne $\lambda_{avg}$ du débit de données sur la valeur maximum du débit $\lambda_{peak}$ :

$$\gamma = \frac{\lambda_{avg}}{\lambda_{peak}}$$

Dans une réalisation, on mesure la valeur moyenne $\lambda_{avg}$ du débit mesurée sur une période prédéterminée au cours de laquelle est déterminée la valeur $\lambda_{peak}$ maximum du débit de données.

Selon une réalisation, on pondère la valeur moyenne $\mu$ de la distribution Gaussienne, par exemple au moyen d'une formule telle que :

$$\mu' = (1 - \gamma)(\mu - \lambda_{avg}) + \lambda_{avg}$$

Selon une réalisation, on utilise une modélisation du trafic de données faisant intervenir des paires de valeurs

$$\{(R_k, I_k) \mid k = 1, ..., p\}$$

où $I_k$ est un intervalle de temps, p une variable généralement comprise entre 4 et 8, et $R_k$ est le débit maximum de données qu'un flux considéré de données peut envoyer pendant cet intervalle $I_k$ de telle sorte que, le débit maximum $R_k$ de données pour le flux $j$ est défini comme étant :

$$R_k = \max_{0 \leq t} \left( \frac{A_j[t, t + I_k]}{I_k} \right)$$

où $A_j[t_1, t_2]$ représente le nombre total de bits envoyés par le flux ($j$) de données considéré entre des instants $t_1$ et $t_2$.

Dans une réalisation, on modélise un flux de données par une série de nombres réels positifs
$\{X_{t_1}, X_{t_2}, ..., X_{t_N}\}$
obtenus à partir d'une fonction $b(t)$ générée au moyen des paires $\{(R_k, I_k) \mid k = 1, ..., p\}$, par exemple selon une formule telle que:

$$b(t) = \frac{R_k I_k - R_{k-1} I_{k-1}}{I_k - I_{k-1}}(t - I_k) + R_k I_k, \quad I_{k-1} \leq t \leq I_k$$

Selon une réalisation, on définit un niveau de confiance $\varepsilon$ en utilisant une variable aléatoire $S_k$, propre à la distribution du débit du flux de données considéré pendant un intervalle $I_k$, en lui associant une fonction de densité de probabilité $s_k$ ($a$) définie comme:

$$S_k(a) = prob\left(\frac{A_j[t, t+I_k]}{I_k} \le a\right), \forall t \ge 0$$

puis en définissant pour chaque intervalle $I_k$ la valeur $R_k$ de la façon suivante:

$$\int_0^{R_k} s_k(t)\,dt = \varepsilon$$

où $0 < \varepsilon \le 1$.

Dans une réalisation, on utilise le contrôle du trafic de données pour décider de l'admission d'un flux de données dans ce réseau, par exemple relatives à des informations multimédia telles qu'une conversation, une vidéoconférence, une image et/ou une séquence d'images, par exemple codées selon le protocole MPEG.

L'invention concerne aussi un dispositif de contrôle du trafic de données dans un réseau de télécommunications, ce contrôle étant effectué en considérant une modélisation statistique du trafic transmis par ce réseau au moyen d'une distribution Gaussienne du débit de données, caractérisé en ce qu'il comprend des moyens pour mettre en oeuvre un procédé selon l'une des réalisations précédentes afin de pondérer une valeur caractéristique de cette distribution Gaussienne au moyen d'un paramètre $\gamma$ variant en fonction de l'intensité des variations, ou la discontinuité, du trafic traité par ce réseau, cette valeur pondérée étant utilisée pour évaluer le trafic dans le réseau.

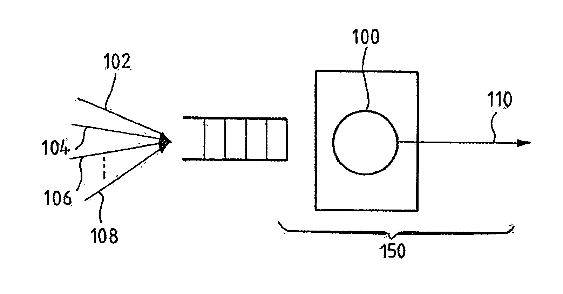

D'autres caractéristiques et avantages de l'invention apparaîtront avec la description effectuée ci-dessous, à titre illustratif et non limitatif, en faisant référence à l'unique figure ci-jointe qui représente schématiquement un procédé de contrôle d'admission, de flux, de données dans un réseau de communication.

Conformément à l'invention, l'algorithme décrit ci-dessous s'applique à un procédé d'admission d'un flux de donnés considéré sous la forme d'une distribution Gaussienne à partir d'une modélisation statistique.

Il convient alors de signaler que le modèle D-BIND, précédemment décrit, utilise des maximums de débits pour caractériser certains intervalles de temps. Or ces maximums ne sont pas connus dans certains cas, par exemple lorsque le flux est traité en temps réel lors de sa réception, de telle sorte que ce modèle ne peut pas s'appliquer dans ces cas.

C'est pourquoi, selon un aspect de l'invention pouvant être utilisé indépendamment des aspects précédemment indiques, on améliore le modèle D-BIND en prenant en compte la non connaissance de paramètres du flux considéré.

Pour cela, on définit une variable aléatoire $S_k$, propre à la distribution du débit du flux de données pendant un intervalle $I_k$, en lui associant une fonction de densité de probabilité $s_k(a)$ définie comme:

$$S_k(a) = prob\left(\frac{A_j[t, t+I_k]}{I_k} \le a\right), \forall t \ge 0$$

où $A_j[t_1, t_2]$ représente le nombre de données du flux $j$ pendant l'intervalle $[t_1, t_2]$.

Pour chaque intervalle $I_k$, on définit $R_k$ de la façon suivante:

$$\int_0^{R_k} s_k(t)\,dt = \varepsilon$$

où $0 < \varepsilon \le 1$.

Quand $\varepsilon = 1$, $R_k$ a la même valeur qu'avec la modélisation D-BIND. Si $\varepsilon$ diminue, $R_k$ décroît, de telle sorte qu'on accroît le rendement de l'utilisation du réseau.

Par la suite, $\varepsilon$ est appelé le niveau de confiance ('confidence level') dans la modélisation S-BIND.

Dans la modélisation S-BIND, chaque flux de données est caractérisé par des triplets de valeurs $\{\varepsilon,(R_k, I_k)|k=1,...p\}$ ou par couples de valeurs $\{(R_k, I_k, \varepsilon_k)|k=1, ...p\}$ selon que le niveau de confiance $\varepsilon$ peut varier ou est fixé pour différents intervalles $I_k$.

Une fois que:les paramètres de S-BIND sont-fixées, le serveur contrôlant la Qualité de Service ('QoS') peut réaliser le contrôle d'admission statistique en utilisant un algorithme de contrôle statistique tel que l'algorithme H-BIND.

Dans cette réalisation, ce serveur utilise l'algorithme de contrôle d'admission γH-BIND, conforme à l'invention, qui définit un paramètre du degré discontinuité d'un flux de données γ de la façon suivante:

$$\dot{\gamma} = \frac{\lambda_{avg}}{\lambda_{peak}}$$

où $\lambda_{avg}$ est une valeur moyenne, mesurée sur une période donnée ou estimée à l'avance, du débit du flux de données, et $\lambda_{peak}$ est la valeur maximum du débit de flux dans le réseau.

Dans cette réalisation, on utilise le paramètre γ pour pondérer la moyenne μ du flux de données calculée au (2) en obtenant une nouvelle valeur μ' de la façon suivante :

$$\mu' = (1 - \gamma)(\mu - \lambda_{avg}) + \lambda_{avg}$$

La pondération de μ permet d'obtenir une série de valeurs $\{X_{t_1}, X_{t_2},...,X_{t_N}\}$ à l'aide de l'algorithme γH-BIND plus performante que la série de valeurs $\{X_{t_1}, X_{t_2},...,X_{t_N}\}$ obtenue au moyen de l'algorithme H-Bind, notamment pour un trafic à faible taux de discontinuité ('non bursty trafic'), comme montré expérimentalement ultérieurement à l'aide des tableaux 1 et 2 en annexe.

De fait, quand le degré de discontinuité du trafic tend à augmenter, alors γ tend vers 0 et la valeur moyenne pondérée μ' tend vers μ.

Au contraire, quand le trafic a un degré de discontinuité faible, alors γ tend à être proche dé 1, la valeur pondérée μ' est proche de la valeur moyenne du flux de données $\lambda_{avg}$.

En résumé, le nouvel algorithme de contrôle d'admission de flux γH-BIND présente ainsi l'avantage, par rapport à l'art antérieur existant et notamment vis-à-vis de l'algorithme H-BIND, de prendre en considération le degré de discontinuité du flux de données, permettant une meilleure utilisation des ressources du réseaux notamment dans le cadre des flux de données faiblement discontinus.

Une expérimentation a été menée sur un noeud 10.0 (cf figure ci-jointe) d'un réseau de télécommunication ayant une pluralité d'entrées de flux 102, 104, 106 et 108 et une seule sortie 110 de capacité C=45 Mbps.

Il convient de signaler que, pour simplifier l'estimation des débits, on ne tient pas compte des communications entre le contrôleur de qualité et le noeud 100.

Dans une première étape de l'expérimentation, dont les résultats sont repris dans le tableau 1, le noeud 100 reçoit un trafic de données comprenant des flux de deux natures, à savoir:

- Des flux de données présentant un faible degré de discontinuité. Par exemple, ce flux comprend des informations relatives à une conversation téléphonique, et
- Des flux de données présentant un haut degré de discontinuité. Par exemple, ce flux comprend des informations relatives à une séquence vidéo.

Tous les flux ont la même limite de délais *d* considérés, c'est-à-dire que ce délai doit être respecté dans la transmission des paquets de données pour que la transmission se réalise.

Ces deux types de flux de données ont les caractéristiques suivantes:

|  | Trafic faible discontinuité | Trafic forte discontinuité |
|---|---|---|
| Moyenne temps OFF | 1,587 s | 0,9 s |
| Moyenne temps ON | 1,004 s | 0,1 s |
| Débit constant pendant la phase ON. | 64 Kbps | 258 Kbps |

Où « moyenne temps off » (respectivement « moyenne temps on ») est la durée pendant laquelle aucune donnée n'est transmise, (respectivement des données sont transmises).

Dans une seconde étape de l'expérimentation, dont les résultats sont repris dans le tableau 2, le nœud 100 reçoit un seul trafic de données présentant un haut degré de discontinuité. Par exemple, ce flux comprend des informations relatives à une séquence vidéo.

Pendant ces simulations, le rendement du réseau 150 selon les algorithmes de contrôle d'accès H-BIND et YH-BIND sont testés avec différences limites de délais d et différents niveaux de confiance ε, comme indiqué dans les tableaux 1 et 2 en annexes.

Ainsi, les limites des délais d considérés ont varié entre 1 ms et 40 ms tandis que les différents niveaux de confiance ε ont varié entre 99% et 77%.

Par ailleurs, la règle de qualité imposée était :

$$\textit{Taux de dépassement de délai maximum} <= 1\%$$

Finalement, il convient d'indiquer que les tableaux 1 et 2 représentent les mesures de débit total et de pourcentage d'utilisation du réseau sous la forme « débit/utitisation % »

On constate alors (cf tableau 1) que, pour un trafic de faible degré de discontinuité, un algorithme $\gamma$H-BIND conforme à l'invention obtient un rendement d'utilisation du réseau supérieur de 3 à 4 % à celui de l'algorithme H-BIND, indépendamment de la valeur du paramètre ε.

En outre, pour un trafic présentant un degré élevé de discontinuité comme, par exemple, un trafic comprenant un flux de données vidéo, un algorithme $\gamma$H-SIND conforme à l'invention permet d'obtenir à nouveau un rendement supérieur au rendement obtenu par l'algorithme H-BIND, indépendamment de la valeur du paramètre ε.

En outre, dans ce second cas, il convient de signaler que le rendement maximum du réseau (valeur "trace").

Finalement, il convient de préciser que les tableaux 1 et 2 indique les valeurs moyenne, mesurée sur une période donnée ou estimée à l'avance, du débit du flux de données et extrême $\lambda_{peak}$ dans chaque cas

La présente invention est susceptible de nombreuses variantes. Ainsi, l'invention peut s'appliquer à un sous-réseau, ou domaine, contrôlé par un serveur de contrôle déterminant de l'admission d'un flux de donné dans ce domaine.

En outre, il est clair que d'autres variables caractéristiques de la distribution Gaussienne utilisée pour modéliser le trafic de données peuvent être pondérés au moyen d'une variable fonction de la discontinuité du trafic, comme par exemple la variance de la distribution.

Tableau 1

| Délai | | 1 ms | 5 ms | 10 ms | 20 ms | 40 ms |
|---|---|---|---|---|---|---|
| Trace | | 1668 / 92 % | 1700 / 94 % | 1715 / 95 % | 1732 / 96 % | 1753 / 97 % |
| Valeur extrême | | 703 / 39 % | 703 / 39 % | 703. / 39 % | 703 / 39 % | 703 / 39 %' |
| Valeur moyenne | | 1814 / 100 % | 1814 / 100 % | 1814 / 100 % | 1814 / 100 % | 1814 / 100 % |
| HBind | ε = 99 % | 1503 / 83 % | 1559 / 87 % | 1572 / 87 % | 1575 / 87 % | 1580 / 88 % |
| | ε = 95 % | 1512 / 84 % | 1588 / 88 % | 1590 / 88 % | 1593 / 88 % | 1595 / 88 % |
| | ε = 90 % | 1521 / 84 % | 1601 / 89 % | 1603 / 89 % | 1605 / 89 % | 1606 / 89 % |
| | ε = 80 % | 1532 / 85 % | 1618 / 90 % | 1619 / 90 % | 1619 / 90 % | 1620 / 90 % |
| | ε = 70 % | 1548 / 86 % | 1628 / 90 % | 1628 / 90 % | 1629 / 90 % | 1629 / 90 % |
| $\gamma$HBind | ε = 99 % | 1573 / 87 % | 1644 / 91 % | 1647 / 91 % | 1651 / 91 % | 1656 / 92 % |
| | ε = 95 % | 1579 / 87 % | 1660 / 92 % | 1663 / 92 % | 1666 / 92 % | 1669 / 92 % |
| | ε = 90 % | 1585 /88 % | 1671 / 93 % | 1673 / 93 % | 1675 / 93 % | 1676 / 93 % |
| | ε = 80 % | 1593 / 88 % | 1683 / 93 % | 1684 / 93 % | 1684 / 93 % | 1684 / 93% |
| | ε = 70 % | 1606 / 89 % | 1690 / 94 % | 1690 / 94 % | 1690 / 94 % | 1690 / 94 % |

Tableau 2

| Délai | | 1ms | 5ms | 10ms | 20ms | 40ms |
|---|---|---|---|---|---|---|
| Trace | | 1085 / 62 % | 1120 / 64 % | 1147 / 66 % | 117,0 / 67 % | 1200 / 69 % |
| Valeur extrême | | 170 /10 % | 170 / 10 % | 170 / 10 % | 170 / 10 % | 170 / 10 % |
| Valeur moyenne | | 1744 / 100 % | 1744 100 % | 1744 / 100 % | 1744 / 100 % | 1744 / 100 % |
| HBind | $\varepsilon = 99\ \%$ | 868 / 51% | 943 / 56 % | 986 / 58 % | 999 / 59 % | 1005 / 59 % |
| | $\varepsilon = 95\ \%$ | 954 / 56 % | 1036 / 61 % | 1306 / 65 % | 1199 / 66 % | 1125 / 66 % |
| | $\varepsilon = 90\ \%$ | 1068 / 63 % | 1153 / 68 % | 1156 / 68 % | 1159 / 68 % | 1163 / 159 % |
| | $\varepsilon = 80\ \%$ | 1442 / 85 % | 1541 / 91 % | 1541 / 91 %, | 1541 / 91 % | 1541 / 91 % |
| | $\varepsilon = 70\ \%$ | 1541 / 91 % | 1584 / 93 % | 1614 / 95 % | 1639 / 97 % | 1659 / 98 % |
| $\gamma$HBind | $\varepsilon = 99\%$ | 901 / 53 % | 978 / 58 % | 1025 / 60 % | 1040 % 61 % | 1047 / 62 % |
| | $\varepsilon = 95\ \%$ | 983 / 58 % | 1068 / 63 % | 1142/67 % | 1158 / 68 % | 1164 / 69 % |
| | $\varepsilon = 90\ \%$ | 1101 / 65 % | 1190 / 70 % | 1194 / 70 % | 1197 / 71 % | 1201 / 71 % |
| | $\varepsilon = 80\ \%$ | 1465 / 86 % | 1541 / 91 % | 1541 / 91 % | 1541 / 91 % | 1541 / 91 % |
| | $\varepsilon = 70\ \%$ | 1541 / 91 % | 1590 / 94 % | 1615 / 95 % | 1642 / 97 % | 1663 / 98 % |

**Revendications**

1. Procédé de contrôle du trafic de données dans un réseau (150) de télécommunications, ce contrôle étant effectué en considérant une modélisation statistique (D-BIND, S-BIND) du trafic transmis par ce réseau (150) au moyen d'une distribution Gaussienne du débit de données, une pondération d'une valeur ($\mu$ , $\sigma$) caractéristique de cette distribution Gaussienne au moyen d'un paramètre $\gamma$ variant en fonction de l'intensité des variations, ou la discontinuité, du trafic traité par ce réseau (150) est effectuée, cette valeur pondérée ($\mu'$, $\sigma$) étant utilisée pour évaluer le trafic dans le réseau, **caractérisé en ce qu'**on définit le paramètre $\gamma$ de pondération à l'aide d'une valeur moyenne $\lambda_{avg}$ du débit de données et d'une valeur $\lambda_{peak}$ maximum de ce débit sur une période donnée.

2. Procédé selon la revendication 1 **caractérisé en ce qu'**on définit le paramètre $\gamma$ de pondération comme le rapport entre la moyenne $\lambda_{avg}$ du débit de données sur la valeur maximum du débit $\lambda_{peak}$ :

$$\gamma = \frac{\lambda_{avg}}{\lambda_{peak}}$$

3. Procédé selon la revendication 1 ou 2 **caractérisé en ce qu'**on mesure la valeur moyenne $\lambda_{avg}$ du débit mesurée sur une période prédéterminée au cours de laquelle est déterminée la valeur $\lambda_{peak}$ maximum du débit de données:

4. Procédé selon la revendication 2 ou 3, **caractérisé en ce qu'**on pondère la valeur moyenne $\mu$ de la distribution Gaussienne, par exemple au moyen d'une formule telle que :

$$\mu' = (1 - \gamma)(\mu - \lambda_{avg}) + \lambda_{avg}$$

5. procédé selon l'une des revendications précédentes **caractérisé en ce qu'**on utilise une modélisation du trafic de données faisant intervenir des paires de valeurs

$$\{(R_k, I_k) \mid k = 1, ..., p\}$$

où $I_k$ est un intervalle de temps, p une variable, généralement comprise entre 4 et 8, et $R_k$ est le débit maximum de données qu'un flux considéré de données peut envoyer pendant cet intervalle $I_k$ de telle sorte que, le débit maximum $R_k$ de données pour le flux $j$ est défini comme étant :

$$R_k = \max_{0 \leq t} \left( \frac{A_j[t, t + I_k]}{I_k} \right)$$

où $A_j[t_1, t_2]$ représente le nombre total de bits envoyés par le flux ($j$) de données considéré entre des instants $t_1$ et $t_2$.

6. Procédé selon la revendication 5 **caractérisé en ce qu'**on modélise un flux de données par une série de nombres réels positifs

$$\{X_{t_1}, X_{t_2}, ..., X_{t_N}\}$$

obtenus à partir d'une fonction $b(t)$ générée au moyen des paires; $\{(R_k, I_k) \mid k=1,...,p\}$, par exemple selon une formule telle que:

$$b(t) = \frac{R_k I_k - R_{k-1} I_{k-1}}{I_k - I_{k-1}} (t - I_k) + R_k I_k, I_{k-1} \leq t \leq I_k$$

7. Procédé selon la revendication 6 **caractérisé en ce qu'**on définit un niveau de confiance $\varepsilon$ en utilisant une variable aléatoire $S_k$, propre à la distribution du débit du flux de données considéré pendant un intervalle $I_k$, en lui associant une fonction de densité de probabilité $s_k (a)$ définie comme:

$$S_k(a) = prob\left( \frac{A_j[t, t + I_k]}{I_k} \leq a \right), \forall t \geq 0$$

puis en définissant pour chaque intervalle $I_k$ la valeur $R_k$ de la façon suivants:

$$\int_0^{R_k} s_k(t) dt = \varepsilon$$

où $0 < \varepsilon \leq 1$.

8. Procédé selon l'une des revendications précédentes **caractérisé en ce qu'**on utilise le contrôle du trafic de données pour décider de l'admission d'un flux de données dans ce réseau, par exemple relatives à des informations multimédia telles qu'une conversation, une vidéoconférence, une image et/ou une séquence d'images, par exemple codées selon le protocole MPEG.

9. Dispositif de contrôle du trafic de données dans un réseau (150) de télécommunications, ce contrôle- étant effectué en considérant une modélisation statistique (D-BIND), S-BIND) du trafic transmis par ce réseau (150) au moyen d'une distribution Gaussienne du débit de données, **caractérisé en ce qu'**il comprend des moyens pour mettre en oeuvre un procédé selon l'une des revendications précédentes afin de pondérer une valeur, ($\mu$, $\sigma$) caractéristique

de cette distribution Gaussienne au moyen d'un paramètre γ variant en fonction de l'intensité des variations bu la discontinuité, du trafic traité par ce réseau (150), cette valeur pondérée (μ',σ) étant utilisée pour évaluer le trafic dans le réseau.

**Claims**

1. Method of controlling data traffic in a telecommunications network (150) said control using a statistical model (D-BIND, S-BIND) of the traffic transmitted by the network (150) by means of a Gaussian distribution of the data bit rate, said control using a value (μ, σ) characteristic of said Gaussian distribution being weighted by a parameter γ varying as a function of the intensity ot the variations, also known as the burstiness, of the traffic processed by the network (150) and said weighted value (μ', σ) is used to evaluate the traffic in the network, which method is **characterised in that** the weighting parameter γ is defined by means of an average value $\lambda_{avg}$ of the data bit rate and a maximum value $\lambda_{peak}$ of the data hit rate over a given period.

2. Method according to claim 1 **characterised in that** the weighting parameter γ is defined as the ratio of the average value $\lambda_{avg}$ of the data bit rate to the maximum value $\lambda_{peak}$ of the data bit rate:

$$\gamma \;=\; \frac{\lambda_{avg}}{\lambda_{peak}}$$

3. Method according to claim 1 or claim 2 **characterised in that** the average value $\lambda_{avg}$ of the data bit rate is measured over a predetermined period during which the maximum value $\lambda_{peak}$ of the data bit rate is determined.

4. Method according to claim 2 or claim 3 **characterised in that** the average value μ of the Gaussian distribution is weighted, for example by means of a formula such as :

$$\mu' = (1 - \gamma)(\mu - \lambda_{avg}) + \lambda_{avg}$$

5. Method according to any one of the preceding claims **characterized in that** a model of the data traffic is used involving pairs of values

$$\{(R_k, I_k) | k = 1, \ldots, p\}$$

in which $I_k$ is an interval $p$ is a variable generally having a value from 4 to 8 and $R_k$ is the maximum data bit rate that a given data stream can send during that interval $I_k$ such that, the maximum data bit rate $R_k$ for the stream $j$ is defined as follows:

$$R_k \;=\; \max_{0 \le t} \left( \frac{A_j[t, t + I_k]}{I_k} \right)$$

where $A_j[t_1, t_2]$ represents the total number of bits sent by the data stream *(j)* concerned between the times $t_1$ and $t_2$.

6. Method according to claim 5 **characterised in that** a data stream is modelled by a series of positive real numbers

$$\{X_0, X_1, \ldots, X_N\}$$

obtained from a function *b(t)* generated by means of pairs of values $\{(R_k, I_k)|k= 1...p\}$, for example in accordance with a formula such as:

$$b(t) = \frac{R_k I_k - R_{k-1} I_{k-1}}{I_k - I_{k-1}} (t - I_k) + R_k I_k, \quad I_{k-1} \leq t \leq I_k$$

**7.** Method according to claim 6, **characterised in that** a confidence level is defined using a random variable $S_k$ specific to the distribution of the data stream bit rate concerned during an interval $I_k$ by associating with it a probability density function $s_k(a)$ defined as follows:

$$S_k(a) = prob\left( \frac{A_j [t, t + I_k]}{I_k} \leq a \right), \quad \forall t \geq 0$$

and then defining the value $R_k$ for each interval $I_k$ as follows:

$$\int_0^{R_k} S_k(t)\, dt = \varepsilon$$

where $0 < \varepsilon \leq 1$.

**8.** Method according to any one of the preceding claims **characterised in that** data traffic control is used to decide whether to admit into the network a data stream relating, for example, to multimedia information such as a conversation, a videoconference, a picture and/or a sequence of pictures coded in accordance with the MPEG protocol, for example.

**9.** Device for controlling data traffic in a telecommunications network (150) using a statistical model (D-BIND, S-BIND) of the traffic transmitted by the network (150) and a Gaussian distribution of the data bit rate, which device is **characterised in that** it comprises means for executing a method according to any one of the preceding claims to weight a value ($\mu$, $\sigma$) characteristic of said Gaussian distribution by a parameter $\gamma$ varying as a function of the intensity of the variations, also known as the burstiness, of the traffic processed by the network (150) and said weighted value ($\mu'$, $\sigma$) is used to evaluate the traffic in the network.

**Patentansprüche**

**1.** Verfahren zur Steuerung des Datenverkehrs in einem Telekommunikationsnetz (150), wobei diese Steuerung bewerkstelligt wird, indem eine statistische Darstellung (D-BIND, S-BIND) des von diesem Netz (150) übermittelten Verkehrs mittels einer Gaußschen Verteilung des Datendurchsatzes berücksichtigt und eine Gewichtung eines charakteristischen Wertes ($\mu$, $\sigma$) dieser Gaußschen Verteilung mittels eines Parameters $\gamma$ vorgenommen wird, der sich in Abhängigkeit von der Intensität der Schwankungen oder der Diskontinuität des von diesem Netz (150) verarbeiteten Verkehrs ändert, wobei dieser gewichtete Wert ($\mu'$, $\sigma$) verwendet wird, um den Verkehr im Netz abzuschätzen, **dadurch gekennzeichnet, daß** man den Gewichtungsparameter $\gamma$ mit Hilfe eines Mittelwertes $\lambda_{avg}$ des Datendurchsatzes und eines Maximalwertes $\lambda_{peak}$ dieses Durchsatzes über eine vorgegebene Zeitspanne definiert.

**2.** Verfahren gemäß Anspruch 1, **dadurch gekennzeichnet, daß** man den Gewichtungsparameter $\gamma$ als das Verhältnis zwischen dem Mittelwert $\lambda_{avg}$ des Datendurchsatzes und dem Maximalwert $\lambda_{peak}$ des Durchsatzes definiert:

$$\gamma = \frac{\lambda_{avg}}{\lambda_{peak}}$$

3. Verfahren gemäß Anspruch 1 oder 2 **dadurch gekennzeichnet, daß** man den Mittelwert $\lambda_{avg}$ des Datendurchsatzes mißt, der über eine zuvor festgelegte Zeitspanne gemessen wurde, innerhalb derer der Maximalwert $\lambda_{peak}$ des Datendurchsatzes bestimmt wird.

4. Verfahren gemäß Anspruch 2 oder 3, **dadurch gekennzeichnet, daß** der Mittelwert $\gamma$ der Gaußschen Verteilung beispielsweise mittels einer Formel wie der folgenden gewichtet wird:

$$\mu' = (1-\gamma)(\mu-\lambda_{avg}) + \lambda_{avg}$$

5. Verfahren gemäß einem der vorgenannten Ansprüche, **dadurch gekennzeichnet, daß** eine Darstellung des Datenverkehrs unter Verwendung von Wertepaaren

$$\{(R_k, I_k) \mid k = 1,...,p\}$$

bewerkstelligt wird, wobei $I_k$ ein Zeitintervall, $p$ eine allgemein zwischen 4 und 8 liegende Variable und $R_k$ der maximale Datendurchsatz sind, den ein während dieses Intervalls $I_k$ betrachteter Datenfluß derart versenden kann, daß der maximale Datendurchsatz $R_k$ für den Fluß $j$ als

$$R_k = \max_{0 \le t}\left( \frac{A_j[t, t+I_k]}{I_k} \right)$$

definiert ist, wobei $A_j\,[t1,\,t2]$ für die Gesamtzahl der von dem zwischen zwei Zeitpunkten $t1$ und $t2$ betrachteten Datenfluß ($j$) gesendeten Bits steht.

6. Verfahren gemäß Anspruch 5, **dadurch gekennzeichnet, daß** man einen Datenfluß als Folge von positiven reellen Zahlen

$$\{X_{t_1}, X_{t_2},...,X_{t_N}\}$$

darstellt, die sich aus einer Funktion $b(t)$ ergeben, die mittels Paaren $\{(R_k, I_k) \mid k=1,...,p\}$ beispielsweise gemäß einer Formel wie

$$b(t) = \frac{R_k I_k - R_{k-1} I_{k-1}}{I_k - I_{k-1}}(t - I_k) + R_k I_k,\ I_{k-1} \le t \le I_k$$

erzeugt werden.

7. Verfahren gemäß Anspruch 6, **dadurch gekennzeichnet, daß** man ein Vertrauensniveau $\varepsilon$ unter Verwendung einer Zufallsvariablen $S_k$ definiert, welche für die Verteilung des während eines Intervalls $I_k$ betrachteten Datenflusses charakteristisch ist, indem man ihr eine Wahrscheinlichkeitsdichtefunktion $s_k(a)$ zuordnet, die als

$$S_k(a) = prob\left(\frac{A_j[t, t+I_k]}{I_k} \leq a\right), \forall t \geq 0$$

definiert ist, und indem anschließend für jedes Intervall $I_k$ der Wert $R_k$ in der Form

$$\int_0^{R_k} s_k(t)dt = \varepsilon$$

definiert wird, wobei $0 < \varepsilon \leq 1$ ist.

**8.** Verfahren gemäß einem der vorgenannten Ansprüche, **dadurch gekennzeichnet, daß** man die Steuerung des Datenflusses verwendet, um über die Zulassung eines Datenflusses in diesem Netz zu entscheiden, beispielsweise bezogen auf Multimedia-Informationen wie etwa ein Gespräch, eine Videokonferenz, ein Bild und/oder eine beispielsweise gemäß dem MPEG-Protokoll kodierte Bildfolge.

**9.** Vorrichtung zur Steuerung des Datenverkehrs in einem Telekommunikationsnetz (150), wobei diese Steuerung bewerkstelligt wird, indem eine statistische Darstellung (D- BIND, S-BIND) des von diesem Netz (150) übermittelten Verkehrs mittels einer Gaußschen Verteilung des Datendurchsatzes berücksichtigt wird, **dadurch gekennzeichnet, daß** sie Mittel beinhaltet, um ein Verfahren gemäß einem der vorgenannten Ansprüche dafür einzusetzen, einen charakteristischen Wert ($\mu$, $\sigma$) dieser Gaußschen Verteilung mittels eines Parameters $\gamma$ zu gewichten, der sich in Abhängigkeit von der Intensität der Schwankungen oder der Diskontinuität des von diesem Netz (150) verarbeiteten Verkehrs verändert, wobei dieser gewichtete Wert ($\mu'$, $\sigma$) verwendet wird, um den Verkehr im Netz abzuschätzen.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• US 5848057 A

**Littérature non-brevet citée dans la description**

• **E. W. KRIIGHTLY.** H-BIND: A New Approach to Providing Statistical Performance Guarantees to VBR Traffic. *Proceedings of IEEE INFOCOM '96,* Mars 1996, 1091-1099